.Europäisches Patentamt

(19) **European Patent Office**

**Office européen des brevets**

(11) Veröffentlichungsnummer: **0 193 772**

**B1**

(12) **EUROPÄISCHE PATENTSCHRIFT**

(45) Veröffentlichungstag der Patentschrift: **18.04.90**

(21) Anmeldenummer: **86101970.1**

(22) Anmeldetag: **17.02.86**

(51) Int. Cl.⁵: **B 65 G 47/90,** B 65 G 61/00

(54) **Vorrichtung zur automatischen Entnahme von Gegenständen aus Behältern.**

(30) Priorität: **06.03.85 DE 3507815**

(43) Veröffentlichungstag der Anmeldung:
**10.09.86 Patentblatt 86/37**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**EP-A-0 143 897**
**FR-A-1 518 730**
**FR-A-2 354 859**

(73) Patentinhaber: **Hermann Spicher GmbH**
**Waltherstrasse 78**
**D-5000 Köln 80 (DE)**

(72) Erfinder: **Spicher, Hermann**
**Forststrasse 7**
**D-5060 Bergisch Gladbach 1 (DE)**

(74) Vertreter: **Patentanwälte Dipl.-Ing. W. Dahlke**
**Dipl.-Ing. H.-J. Lippert**
**Frankenforster Strasse 137**
**D-5060 Bergisch Gladbach 1 (DE)**

Courier Press, Leamington Spa, England.

**Beschreibung**

Die Erfindung betrifft eine Vorrichtung zur automatischen einzelnen oder gruppenweisen Entnahme von Gegenständen aus Behältern, bestehend aus einem Gestell, in dessen unterem Bereich mindestens ein Behälter mit den zu entnehmenden Gegenständen aufstellbar ist, einem an dem Gestell im Bereich über dem Behälter beweglich angeordneten Entnahmearm, einer Halterung für den Entnahmearm, die über eine Verschwenkeinrichtung mit dem Gestell verbunden ist, einem Antrieb zur Verschwenkung der Halterung sowie einem Antrieb zur Längsverschiebung des Entnahmearms relativ zu der Halterung. Eine solche Vorrichtung ist in der EP-A-143897 beschrieben, die zum Stand der Technik gemäß Artikel 54(3)EPÜ gehört.

Der Erfindung liegt die Aufgabe zugrunde, die Vorrichtung der genannten Art derart weiter auszubilden, daß der Verschwenkmechanismus für die Halterung des Entnahmearms mit geringstmöglichem vorrichtungstechnischem Aufwand auskommt.

Erfindungsgemäß wird diese Aufgabe dadurch gelöst daß die Verschwenkeinrichtung einen in dem Gestell gelagerten, nicht verschwenkberen Drehkranz aufweist, an welchem die Halterung mit dem Entnahmearm um eine durch die Rotationsachse des Drehkranzes verlaufende Tragachse schwenkbar aufgehängt ist.

Bei der erfindungsgemäßen Vorrichtung wird die Schwenkbewegung, die die Halterung des Entnahmearms um die Tragachse ausführt, mit einer Drehbewegung überlagert, so daß der Greifteil des Entnahmearms ebenso wie bei einer kardanischen Aufhängung eine Rasterfläche im Inneren eines Werkstückbehälters abtasten kann.

Die Rotationsachse des Drehkranzes ist dabei im wesentlichen vertikal angeordnet.

Die Tragachse, an der die Halterung mit dem Entnahmearm aufgehängt ist, ist im wesentlichen horizontal angeordnet, so daß die Halterung mit dem Entnahmearm in ihrer mittleren Stellung senkrecht nach unten weist.

Die Halterung mit dem Entnahmearm kann durch den Drehkranz hindurchgreifen, wobei die Halterung etwa in ihrem oberen Drittel mit der Tragachse verbunden ist.

Der untere Ringteil des Drehkranzes ist zweckmäßig auf einer quer durch das Gestell verlaufenden Traverse befestigt.

Auf dem oberen Ringteil des Drehkranzes, der unter Zwischenschaltung von Laufkugeln auf dem unteren Ringteil drehbar abgestützt ist, kann die Tragachse für die Halterung des Entnahmearms angeordnet sein.

Der obere Ringteil des Drehkranzes ist vorzugsweise mit einer Verzahnung versehen, in die ein antreibbares Ritzel eingreift. Das Ritzel sitzt dabei zweckmäßig auf der Welle eines mit dem Gestell verbundenen Elektromotors, so daß durch Betätigung des Elektromotors der obere Ringteil des Drehkranzes relativ zu dem unteren Ringteil gedreht werden kann.

Zur Verschwenkung der Halterung des Entnahmearms um die Tragachse kann an der Halterung ein Zahnradsegment vorgesehen sein, daß in einer senkrecht zu der Tragachse verlaufenden Ebene liegt, wobei mit dem Zahnradsegment ein Ritzel im Eingriff steht, das auf der Welle eines auf dem oberen Ringteil des Drehkranzes angeordneten Elektromotors sitzt.

Der Greifteil des Entnahmearms ist vorzugsweise drehbar. Wenn der Greifteil als Doppelmagnet ausgebildet ist, kann aufgrund der Drehbarkeit des Greifteils die Lage des Doppelmagneten unabhängig von der Drehstellung immer zur selben Seite hin ausgerichtet sein.

Der Drehkranz ist zweckmäßig auf einem in dem Gestell verfahrbaren Schlitten montiert. Dadurch ist es möglich, den Entnahmearm von einem Werkstückbehälter zum anderen zu fahren und die Behälter nacheinander oder auch in wechselnder Folge zu entleeren. Dabei kann der Schlitten auch in sich kreuzenden Richtungen verfahren werden.

Die Erfindung ist in der Zeichnung beispielsweise veranschaulicht und im nachstehenden im einzelnen anhand der Zeichnung beschrieben. Es zeigen:

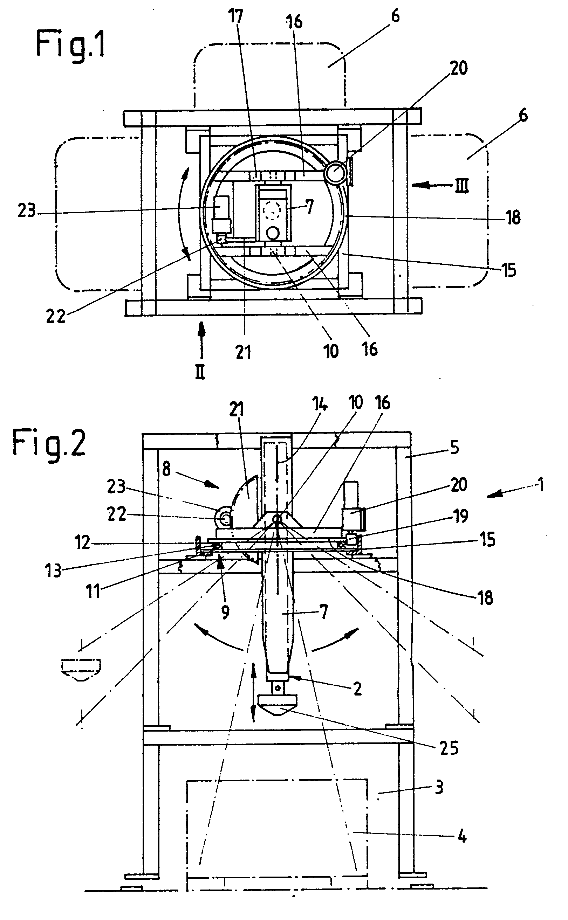

Fig. 1 eine Draufsicht auf eine Vorrichtung zur automatischen einzelnen Entnahme von Gegenständen aus Behältern,

Fig. 2 eine Ansicht der Vorrichtung aus Fig. 1 in Richtung des Pfeiles II und

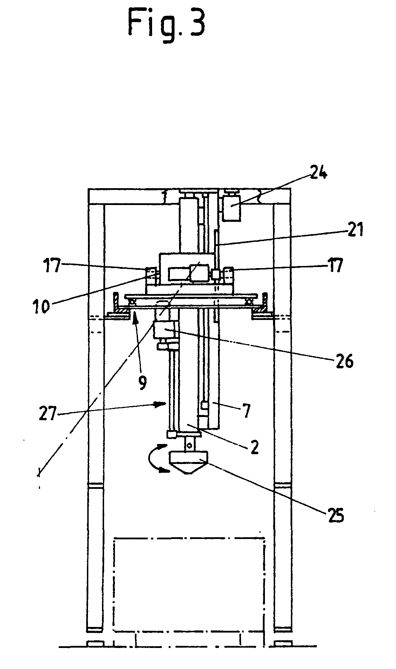

Fig. 3 eine Ansicht der Vorrichtung aus Fig. 1 in Richtung des Pfeiles III.

Nach der Zeichnung besteht die automatische Entnahmevorrichtung im wesentlichen aus einem Gestell 1, einem an dem Gestell gelagerten Entnahmearm 2 sowie im unteren Teil des Gestells unterhalb des Entnahmearms 2 einem Aufnahmebereich 3 für mindestens einen zu entleerenden Behälter 4.

Das Gestell 1 besteht aus stabilen Stahlträgern 5 und ist außen herum mit einer in der Zeichnung nicht näher dargestellten Schutzverkleidung versehen, die sich zum Einsetzen und Herausnehmen des Behälters 4 öffnen läßt.

Neben dem Gestell 1 können an drei Seiten Auffangbehälter 6 für die einzelnen aus dem Behälter 4 entnommenen Gegenstände vorgesehen sein. Die Auffangbehälter 6 sind Teil von nicht näher dargestellten Sortiereinrichtungen.

Der Entnahmearm 2 sitzt in einer Halterung 7, die im oberen Bereich des Gestells 1 oberhalb des Behälters 4 von einer Verschwenkeinrichtung 8 getragen wird.

Zu der Verschwenkeinrichtung 8 gehören ein Drehkranz 9 sowie eine an diesem befestigte Tragachse 10, auf der die Halterung 7 des Entnahmearms 2 gelagert ist.

Der Drehkranz 9 besteht aus einem unteren Ringteil 11, einem oberen Ringteil 12 sowie zwischen den beiden Ringteilen angeordneten Kugeln 13, so daß sich die Ringteile relativ zueinander um eine Rotationsachse 14 drehen können.

Der untere Ringteil 11 ist in horizontaler Ausrichtung auf einer Traverse 15 befestigt, die starr mit dem Gestell 1 verbunden sein kann. Auf dem oberen Ringteil 12 sind zwei parallele Querträger 16 befestigt, die in ihrer Mitte jeweils einen Lagerbock 17 zur Aufnahme der Tragachse 10 aufweisen. Die Lagerböcke 17 sind so angeordnet, daß die Tragachse 10 in horizontaler Ausrichtung genau durch die Rotationsachse 14 des Drehkranzes 9 verläuft.

An dem oberen Ringteil 12 ist eine Außenverzahnung 18 vorgesehen, in die ein Ritzel 19 eingreift, welches auf der Welle eines fest mit der Traverse 15 verbundenen elektrischen Getriebemotors 20 sitzt. Durch Betätigung des Elektromotors wird der obere Ringteil gedreht, wodurch auch die Tragachse 10 mit dem Entnahmearm 2 gedreht wird.

Zur Verschwenkung der Halterung 7 des Entnahmearms 2 dient ein an der Halterung 7 befestigtes Zahnradsegment 21, welches mit einem Ritzel 22 im Eingriff steht. Das Ritzel 22 sitzt auf der Welle eines elektrischen Getriebemotors 23, der auf den Querträgern 16 befestigt ist und sich folglich zusammen mit dem oberen Ringteil 12 des Drehkranzes dreht. Durch Betätigung des Ritzels 22 wird die Halterung um die Tragachse 10 verschwenkt.

Der Entnahmearm 2 ist in der Halterung 7 längsverschieblich geführt und kann mit Hilfe eines nicht näher dargestellten Spindelantriebs auf- und abbewegt werden. Der Spindelantrieb wird mit Hilfe eines elektrischen Getriebemotors 24 betätigt.

Darüber hinaus ist der am unteren Ende des Entnahmearms 2 sitzende Greifteil 25 drehbar in dem Entnahmearm 2 gelagert und mit Hilfe eines Elektromotors 26 sowie einer Getriebeeinrichtung 27 drehbar. Die Drehbarkeit des Greifteils 25 ist bei der in der Zeichnung dargestellten Ausführungsform der Vorrichtung insbesondere dann von Wichtigkeit, wenn der Greifteil als doppelter Magnetkopf ausgebildet ist, der zur Entfaltung seiner optimalen Funktionsfähigkeit stets nach einer Seite hin ausgerichtet sein sollte.

Durch Kombination der Schwenkbewegung des Entnahmearms mit der durch den Drehkranz 9 bewirkten Rotationsbewegung kann der Greifteil 25 des Entnahmearms jedes vorgegebene Raster abtasten, wobei durch entsprechende Drehung des Greifteils relativ zu dem Entnahmearm 2 auch eine genaue Ausrichtung des Greifteils zu dem Raster erfolgen kann.

Die Betätigung der Vorrichtung erfolgt über ein programmierbares, in der Zeichnung nicht dargestelltes Steuergerät. Der Entnahmearm wird dabei so bewegt, daß er den Behälterinnenraum zeilenweise abtastet, und zwar in jeder Zeile in einer bestimmten Anzahl von Positionen. Die Rasterung entspricht dabei der Größe der zu entnehmenden Gegenstände und ist jeweils einstellbar.

Bei einem anderen in der Zeichnung nicht dargestellten Ausführungsbeispiel ist die Traverse 15 zusammen mit dem Drehkranz und dem Entnahmearm auf eine Schlitten angeordnet, der innerhalb des Gestells, das entsprechende Abmessungen aufweist, verfahren werden kann. Je nach Größe und Form des Gestells kann der Schlitten in einer Richtung oder auch in mehreren Richtungen verfahren werden, so daß verschiedene Gruppierungen von Behältern entleert werden können.

**Patentansprüche**

1. Vorrichtung zur automatischen einzelnen oder gruppenweisen Entnahme von Gegenständen aus Behältern, bestehend aus einem Gestell, in dessen unterem Bereich mindestens ein Behälter mit den zu entnehmenden Gegenständen aufstellbar ist, einem an dem Gestell im Bereich über dem Behälter beweglich angeordneten Entnahmearm, einer Halterung für den Entnahmearm, die über eine Verschwenkeinrichtung mit dem Gestell verbunden ist, einem Antrieb zur Verschwenkung der Halterung sowie einem Antrieb zur Längsverschiebung des Entnahmearms relativ zu der Halterung, wobei die Verschwenkeinrichtung (8) einen in dem Gestell (1) gelagerten, nicht verschwenkbaren Drehkranz (9) aufweist, an welchem die Halterung (7) mit dem Entnahmearm (2) um eine durch die Rotationsachse (14) des Drehkranzes (9) verlaufende Tragachse (10) schwenkbar aufgehängt ist.

3. Vorrichtung nach Anspruch 1 oder 2, dadurch gekennzeichnet, daß die Tragachse (10), an der die Halterung (7) mit den Entnahmearm (2) aufgehängt ist, im wesentlichen horizontal angeordnet ist.

4. Vorrichtung nach einem der Ansprüche 1 bis 3, dadurch gekennzeichnet, daß die Halterung (7) mit dem Entnahmearm (2) durch den Drehkranz (g) hindurchgreift.

5. Vorrichtung nach einem der Ansprüche 1 bis 4, dadurch gekennzeichnet, daß die Halterung (7) mit dem Entnahmearm (2) etwa in ihrem oberen Drittel mit der Tragachse (10) verbunden ist.

6. Vorrichtung nach einem der Ansprüche 1 bis 5, dadurch gekennzeichnet, daß der untere Ringteil (11) des Drehkranzes (9) fest mit einer quer durch das Gestell (1) verlaufenden Traverse (15) oder dergleichen verbunden ist.

7. Vorrichtung nach Anspruch 6, dadurch gekennzeichnet, daß auf dem oberen Ringteil (12) des Drehkranzes (9), der unter Zwischenschaltung von Laufkugeln (13) auf dem unteren Ringteil (11) drehbar abgestützt ist, die Tragachse (10) für die Halterung (7) des Entnahmearms (2) angeordnet ist.

8. Vorrichtung nach einem der Ansprüche 1 bis 7, dadurch gekennzeichnet, daß der obere Ringteil (12) des Drehkranzes (9) mit einer Verzahnung (18) versehen ist, in die ein antreibbares Ritzel (19) eingreift.

9. Vorrichtung nach Anspruch 8, dadurch gekennzeichnet, daß das Ritzel (19) auf der Welle eines mit dem Gestell (1) verbundenen Elektromotors (20) sitzt.

10. Vorrichtung nach einem der Ansprüche 1 bis 9, dadurch gekennzeichnet, daß an der Halterung (7) des Entnahmearms (2) ein Zahnradsegment (21) vorgesehen ist, das in einer senkrecht zu der Tragachse (10) verlaufenden Ebene liegt, und daß mit dem Zahnradsegment (21) ein Ritzel (22) im Eingriff steht, das auf der Welle eines auf dem oberen Ringteil (12) des Drehkranzes (g) angeordneten Elektromotors (23) sitzt.

11. Vorrichtung nach einem der Ansprüche 1 bis 10, dadurch gekennzeichnet, daß der Greifteil (25) des Entnahmearms (2) als Doppelmagnet ausgebildet ist.

12. Vorrichtung nach Anspruch 11, dadurch gekennzeichnet, daß der Greifteil (25) des Entnahmearms (2) drehbar ist.

13. Vorrichtung nach einem der Ansprüche 1 bis 12, dadurch gekennzeichnet, daß der Drehkranz (9) auf einem in dem Gestell (1) verfahrbaren Schlitten montiert ist.

14. Vorrichtung nach Anspruch 13, dadurch gekennzeichnet, daß der Schlitten in mindestens zwei sich kreuzende Richtungen verfahrbar ist.

**Revendications**

1. Dispositif pour le prélèvement automatique, individuellement ou par groupes, d'articles dans des conteneurs, se composant d'un châssis dans la région inférieure duquel peut être placé au moins un conteneur avec les articles à prélever, d'un bras de prélèvement monté mobile sur le châssis dans la région située au-dessus du conteneur, d'un organe de montage pour le bras de prélèvement, qui est raccordé au châssis par l'intermédiaire d'un dispositif de pivotement, d'un mécanisme d'entraînement pour le mouvement pivotant de l'organe de montage, ainsi que d'un mécanisme d'entraînement pour le déplacement longitudinal du bras de prélèvement par rapport à son organe de montage, le dispositif de pivotement (8) comprenant une couronne d'orientation (9) non pivotante, montée dans le châssis (1), couronne à laquelle l'organe de montage (7) avec le bras de prélèvement (2) est suspendu de manière à pouvoir pivoter autour d'un axe porteur (10) qui coupe l'axe de rotation (14) de la couronne d'orientation (9).

2. Dispositif selon la revendication 1, caractérisé en ce que l'axe de rotation (14) de la couronne d'orientation (9) est sensiblement vertical.

3. Dispositif selon la revendication 1 ou 2, caractérisé en ce que l'axe porteur (10), auquel est suspendu l'organe de montage (7) avec le bras de prélèvement (2), est sensiblement horizontal.

4. Dispositif selon l'une quelconque des revendications 1 à 3, caractérisé en ce que l'organe de montage (7) avec le bras de prélèvement (2) passe à travers la couronne d'orientation (9).

5. Dispositif selon l'une quelconque des revendications 1 à 4, caractérisé en ce que l'organe de montage (7) avec le bras de prélèvement (2) est relié à l'axe porteur (10) à peu près à son tiers supérieur.

6. Dispositif selon l'une quelconque des revendications 1 à 5, caractérisé en ce que la partie annulaire inférieure (11) de la couronne d'orientation (9) est fixée rigidement à une traverse (15) ou à un élément similaire, qui s'étend transversalement à travers le châssis (1).

7. Dispositif selon la revendication 6, caractérisé en ce que l'axe porteur (10) pour l'organe de montage (7) du bras de prélèvement (2) est disposé sur la partie annulaire supérieure (12) de la couronne d'orientation (9), qui prend appui à rotation sur la partie annulaire inférieure (11) avec interposition de billes de roulement (13).

8. Dispositif selon l'une quelconque des revendications 1 à 8, caractérisé en ce que la partie annulaire supérieure (12) de la couronne d'orientation (9) est munie d'une denture (18) dans laquelle engrène un pignon (19) qui peut être entraîné.

9. Dispositif selon la revendication 8, caractérisé en ce que le pignon (19) est calé sur l'arbre d'un moteur électrique (20) raccordé au châssis (1).

10. Dispositif selon l'une quelconque des revendications 1 à 9, caractérisé en ce qu'il est prévu, sur l'organe de montage (7) du bras de prélèvement (2), un segment denté (21) qui est situé dans un plan perpendiculaire à l'axe porteur (10), et en ce qu'avec ce segment denté (21) est en prise un pignon (22) qui est calé sur l'arbre d'un moteur électrique (23) disposé sur la partie annulaire supérieure (12) de la couronne d'orientation (9).

11. Dispositif selon l'une quelconque des revendications 1 à 10, caractérisé en ce que la partie de préhension (25) du bras de prélèvement (2) est réalisée sous forme d'aimant double.

12. Dispositif selon la revendication 11, caractérisé en ce que la partie de préhension (25) du bras de prélèvement (2) peut tourner.

13. Dispositif selon l'une quelconque des revendications 1 à 12, caractérisé en ce que la couronne d'orientation (9) est monté sur un chariot qui peut se déplacer dans le châssis (1).

14. Dispositif selon la revendication 13, caractérisé en ce que le chariot peut se déplacer au moins dans deux directions qui se croisent.

**Claims**

1. Apparatus for automatically discharging objects individually or in groups from containers, consisting of a stand, in the lower region of which at least one container with the objects to be discharged can be placed, a discharging arm arranged movably on the stand in the region above the container, a mounting intended for the discharging arm and connected to the stand by means of a pivoting device, a drive for pivoting the mounting, and a drive for shifting the discharging arm longitudinally relative to the mounting, wherein the pivoting device (8) has a live ring (9) which cannot be pivoted and is mounted in the stand (1) and on which the mounting (7) together with the discharging arm (2) is suspended so as to be pivotable about a carrying axle (10) extending through the axis of rotation (14) of the live ring (9).

2. Apparatus according to claim 1, characterized in that the axis of rotation (14) of the live ring (9) is arranged essentially vertically.

3. Apparatus according to claim 1 or 2, characterized in that the carrying axle (10), on which the mounting (7) together with the discharging arm (2) is suspended, is arranged essentially horizontally.

4. Apparatus according to one of claims 1 to 3, characterized in that the mounting (7) together with the discharging arm (2) passes through the live ring (9).

5. Apparatus according to one of claims 1 to 4, characterized in that the mounting (7) together with the discharging arm (2) is connected approximately in its upper third to the carrying axle (10).

6. Apparatus according to one of claims 1 to 5, characterized in that the lower ring part (11) of the live ring (9) is connected firmly to a crossmember (15) or the like extending transversely to the stand (1).

7. Apparatus according to claim 6, characterized in that the carrying axle (10) for the mounting (7) of the discharging arm (2) is arranged on the upper ring part (12) of the live ring (9), which is supported rotatably on the lower ring part (11), with ball runners (13) interposed.

8. Apparatus according to one of claims 1 to 7, characterized in that the upper ring part (12) of the live ring (9) is provided with a toothing (18), into which a drivable pinion (19) engages.

9. Apparatus according to claim 8, characterized in that the pinion (19) is located on the shaft of an electric motor (20) connected to the stand (1).

10. Apparatus according to one of claims 1 to 9, characterized in that a toothed quadrant (21) is provided on the mounting (7) of the discharging arm (2) and lies in a plane extending perpendicularly to the carrying axle (10), and in that engaged with the toothed quadrant (21) is a pinion (22) which is located on the shaft of an electric motor (23) arranged on the upper ring part (12) of the live ring (9).

11. Apparatus according to one of claims 1 to 10, characterized in that the grab part (25) of the discharging arm (2) is designed as a double magnet.

12. Apparatus according to claim 11, characterized in that the grab part (25) of the discharging arm (2) is rotatable.

13. Apparatus according to one of claims 1 to 12, characterized in that the live ring (9) is mounted on a slide movable in the stand (1).

14. Apparatus according to claim 13, characterized in that the slide is movable in at least two intersecting directions.

Fig.1

Fig.2

# Fig. 3